# FASCICULE DE BREVET EUROPEEN

(11) **EP 1 800 921 B1**
(45) Date de publication et mention de la délivrance du brevet: **01.06.2011**
(21) Numéro de dépôt: 06301283.5
(22) Date de dépôt: 21.12.2006
(51) Int. Cl.: B60J 1/16

(54) **Sous-ensemble de vitre de custode mobile pour vèhicule**
Modul für ein seitliches hinteres Eckfenster eines Fahrzeuges
Module for a rear quarter light window of a vehicle

(30) Priorité: 23.12.2005 FR 0513242
(43) Date de publication de la demande: 27.06.2007
(73) Titulaire: Renault s.a.s., 92100 Boulogne Billancourt (FR)
(72) Inventeur: HEWAK, Gregor, 95420 VAUREAL FRANCE (FR); VILATTE, Jean-René, TEHERAN (IR)

(56) Documents cités:
- EP-A- 1 234 753
- EP-A- 1 452 362
- FR-A- 2 739 811
- FR-A- 2 818 589
- FR-A- 2 856 348
- JP-A- 2001 071 752

## Description

L'invention concerne un sous-ensemble de vitre de custode pour véhicule selon le préambule de la revendication 1.

L'invention concerne aussi un véhicule comprenant un tel sous-ensemble, et un procédé de montage d'une vitre correspondante.

Un tel sous-ensemble est connu du document EP 1 452 362 A.

On connaît du document FR-2 739 811 au nom de la demanderesse un véhicule automobile présentant de chaque côté une vitre de custode. Chaque vitre s'étend à l'arrière de la porte latérale correspondante, en étant contiguë et à l'arrière de la vitre de cette porte. La vitre de custode est montée mobile pour pouvoir coulisser vers l'arrière, une motorisation étant prévue pour déplacer la vitre.

Dans cet exemple, la vitre de custode est illustrée au sein d'un véhicule présentant une seule porte de chaque côté. Une telle vitre de custode est également envisageable sur un véhicule comportant au moins deux portes de chaque côté.

Le déplacement de la vitre de custode suivant la direction longitudinale du véhicule permet son recul afin de faciliter l'accès des passagers aux places arrières du véhicule. En effet, le recul de la vitre de custode facilite le passage des épaules des personnes entrant dans le véhicule.

Toutefois, l'agencement divulgué dans ce document nécessite de rapporter sur le véhicule de chaque côté la vitre de custode, le moteur, les dispositifs de guidage du mouvement et le mécanisme d'actionnement de la vitre. S'ensuit un nombre relativement élevé d'opérations de montage et d'assemblage. De plus, l'ensemble de l'agencement avec le mécanisme et le moteur est relativement encombrant.

Un but de l'invention est de faciliter le montage sur les véhicules des vitres de custode mobiles et de rendre moins encombrants les mécanismes auxquels elles sont associées.

A cet effet, on prévoit selon l'invention un sous-ensemble de vitre de custode mobile pour véhicule comprenant :
- une vitre ;
- un moteur ; et
- un cadre portant la vitre et le moteur.

Ainsi, le sous-ensemble comportant le cadre, la vitre et le moteur forme un tout qui peut être rapporté tel que en une seule opération sur le véhicule en cours de constitution sur la chaîne. On réduit donc le nombre d'opérations de montage et d'assemblage sur chaîne.

Le sous-ensemble selon l'invention pourra présenter en outre au moins l'une quelconque des caractéristiques suivantes :
- la vitre est montée mobile à coulissement par rapport au cadre ;
- le cadre porte au moins une coulisse de guidage de la vitre ;
- le sous-ensemble est agencé de sorte que, dans sa position la plus reculée, la vitre dépasse d'une extrémité arrière du cadre par référence à la direction de marche du véhicule ;
- le cadre porte au moins un joint d'étanchéité apte à être en contact avec la vitre ;
- la vitre présente un bord avant portant un joint d'étanchéité ; et
- le sous-ensemble comprend des moyens de collecte et d'évacuation d'eau.

On prévoit également selon l'invention un véhicule comprenant au moins un sous-ensemble selon l'invention, le véhicule comprenant une porte portant une vitre, dépourvue de montant arrière et contiguë à la vitre de custode, la porte étant de préférence une porte arrière.

On prévoit également selon l'invention un procédé de montage d'une vitre de custode sur un véhicule dans lequel on rapporte sur un véhicule un cadre portant une vitre et un moteur.

Avantageusement, on rapporte le cadre avec la vitre occupant une position en arrière de sa position la plus avancée par référence au sens de marche du véhicule.

D'autres caractéristiques et avantages de l'invention apparaîtront encore dans la description suivante d'un mode préféré de réalisation donné à titre d'exemple non limitatif en référence aux dessins annexés sur lesquels :
- la figure 1 est une vue latérale partielle d'un véhicule comprenant un sous-ensemble selon l'invention ;
- les figures 2 et 3 sont des vues analogues du véhicule de la figure 1 illustrant différents positionnements d'une vitre latérale et de la vitre de custode ;
- les figures 4 et 5 sont deux vues en élévation illustrant respectivement les faces extérieure et intérieure d'un sous-ensemble de vitre de custode du véhicule de la figure 1 ;
- la figure 6 est une vue analogue à la figure 4 illustrant différentes positions de la vitre dans le sous-ensemble ;
- les figures 7, 8 et 9 sont des vues en perspective de la partie basse du sous-ensemble de la figure 4 illustrant les moyens de guidage de la vitre ;
- la figure 10 est une vue en section suivant le plan X-X du sous-ensemble de la figure 4 en partie basse ;
- les figures 11 et 12 sont des vues en perspective de la partie basse du sous-ensemble de la figure 4 illustrant les moyens d'écoulement d'eau ; et
- les figures 13 à 17 sont des vues en section suivant les plans respectifs XIII-XIII à XVII-XVII du sous-ensemble de la figure 4.

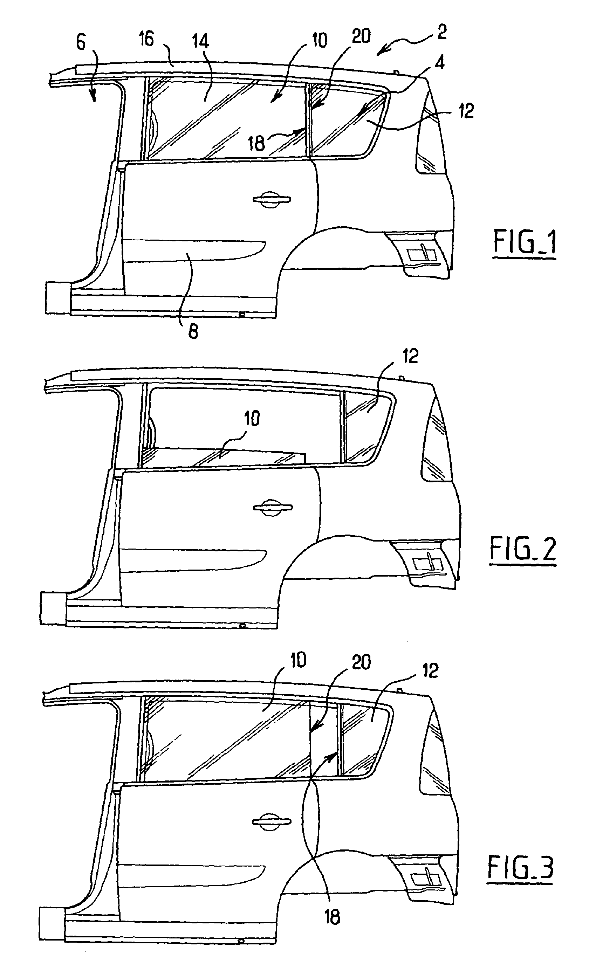

On a illustré aux figures 1 à 3 les parties médiane et arrière d'un véhicule 2 comprenant de chaque côté un sous-ensemble 4 de vitre de custode selon l'invention.

Dans le présent exemple, le véhicule comprend de chaque côté une porte avant obturant une ouverture latérale avant 6 et une porte arrière 8 obturant une ouverture latérale arrière 10. La vitre de custode 12 s'étend à l'arrière de la vitre 14 de la porte 8 lorsque cette vitre 14 occupe sa position la plus haute en contact avec le côté de caisse 16 du véhicule. Ainsi, lorsque la vitre 14 et la vitre de custode 12 sont toutes les deux en position fermée, la vitre de custode 12 s'étend dans le prolongement de la vitre 14. Précisément, un bord vertical avant 18 de la vitre de custode 12 est en contact linéaire avec un bord vertical arrière 20 de la vitre 14. La vitre de custode 12 comprend à cette fin un joint d'étanchéité 22 rendant étanche le contact entre la vitre 14 et la vitre de custode 12.

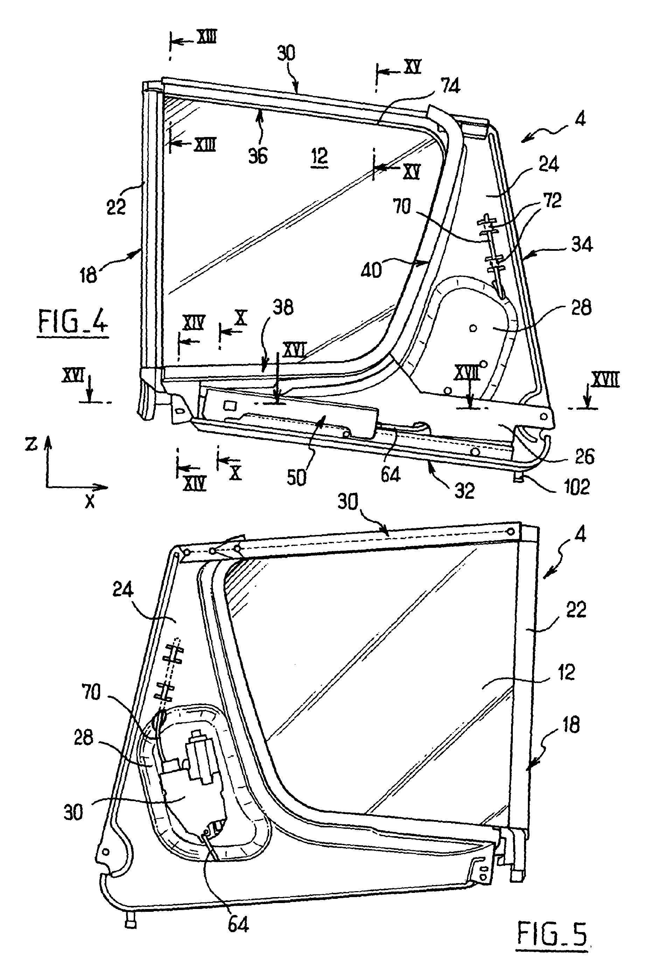

On a illustré aux figures 4 et 5 les faces extérieure et intérieure du sous-ensemble 4 situé sur le côté gauche du véhicule illustré à la figure 1. Il va de soi que le sous-ensemble de vitre de custode destiné à être intégré au côté droit du véhicule a une configuration analogue, symétrique de celle qui va être décrite par référence au plan longitudinal vertical médian du véhicule.

Le sous-ensemble 4 comprend un cadre 24 ou châssis ayant une forme essentiellement plane, parallèle à celle de la vitre. A ce cadre est associée en partie inférieure du sous-ensemble 4 une doublure 26 recouvrant une face du cadre 24 dirigée vers l'extérieur du véhicule et visible à la figure 4. Le cadre comprend en partie arrière basse, c'est-à-dire dans son coin inférieur arrière, un renfoncement 28 permettant de loger un moteur 30 apposé contre la face intérieure du cadre comme illustré à la figure 5.

Le cadre 24 a généralement une forme en « C ». Il est dépourvu de bord avant de sorte qu'un bord avant du sous-ensemble est formé par le joint 22 de la vitre. Le cadre présente des bords longitudinaux supérieur 30 et inférieur 32 essentiellement rectilignes et parallèles l'un à l'autre. Chacun de ces bords est incliné de sorte que son extrémité arrière s'étend plus bas que son extrémité avant. Le cadre présente un bord externe arrière 34 essentiellement rectiligne et incliné par rapport à la direction verticale de sorte que son extrémité supérieure s'étend plus près de l'avant du véhicule que son extrémité inférieure.

Le cadre présente des bords internes supérieur 36 et inférieur 38. Le bord 36 est essentiellement rectiligne et parallèle au bord externe supérieur 30. Le bord 38 est essentiellement rectiligne mais incliné par rapport à la direction horizontale de sorte que son extrémité avant est plus basse que son extrémité arrière. Enfin, le cadre présente un bord interne arrière 40 essentiellement rectiligne et incliné par rapport à la verticale de sorte que son extrémité supérieure s'étend plus en arrière que son extrémité inférieure.

La vitre 12 présente des bords supérieur, inférieur et arrière dont la forme correspond sensiblement à la disposition des bords internes 36, 38 et 40 du cadre. Les dimensions de la vitre sont néanmoins supérieures au périmètre interne du cadre.

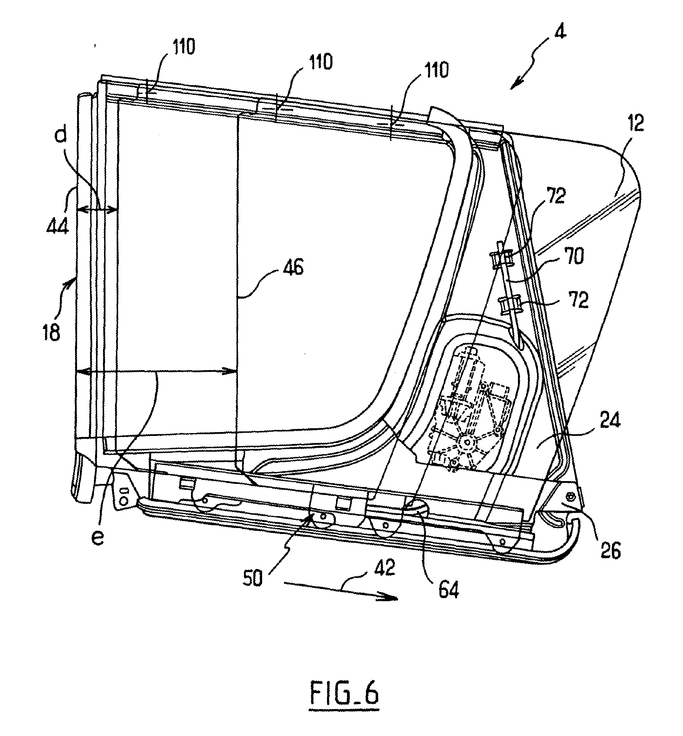

Le cadre porte la vitre 12 de sorte que cette dernière soit montée mobile à coulissement par rapport au cadre. La direction de coulissement 42 illustrée à la figure 6 est parallèle au plan longitudinal médian du véhicule. Elle est inclinée par rapport à la direction horizontale de sorte que le niveau de la vitre s'abaisse légèrement lorsqu'elle coulisse vers l'arrière du véhicule. Dans le présent exemple, le sous-ensemble est configuré de sorte que la distance C, illustrée à la figure 6, entre la position la plus avancée du bord avant 18 de la vitre repérée par la ligne 44 sur la figure 6 et sa position la plus reculée repérée par la ligne 46 est de 200 mm. Comme illustré à la figure 6, dans sa position la plus reculée, la vitre dépasse du cadre vers l'arrière.

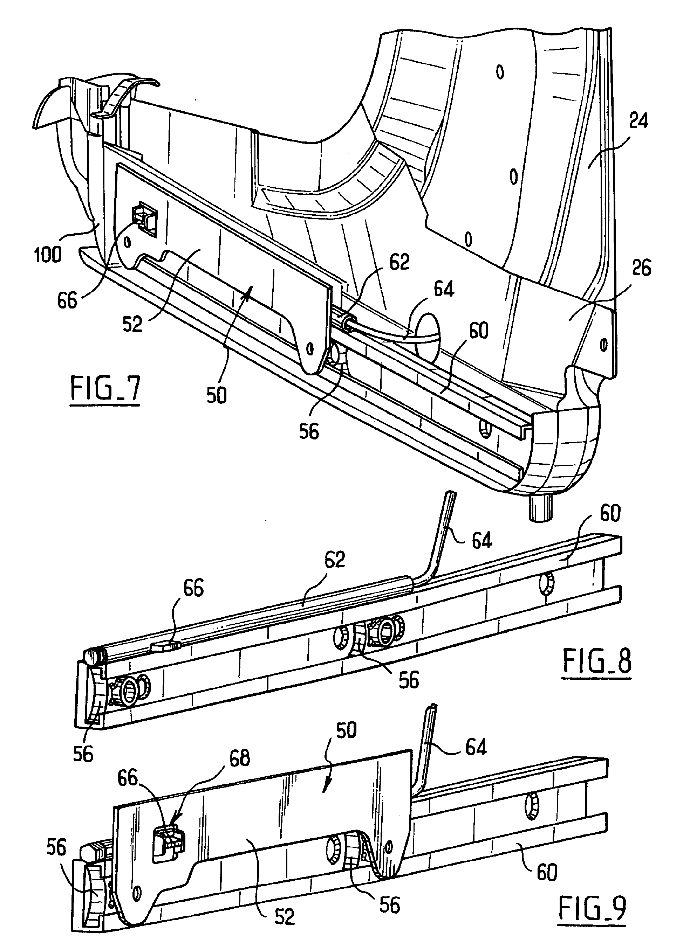

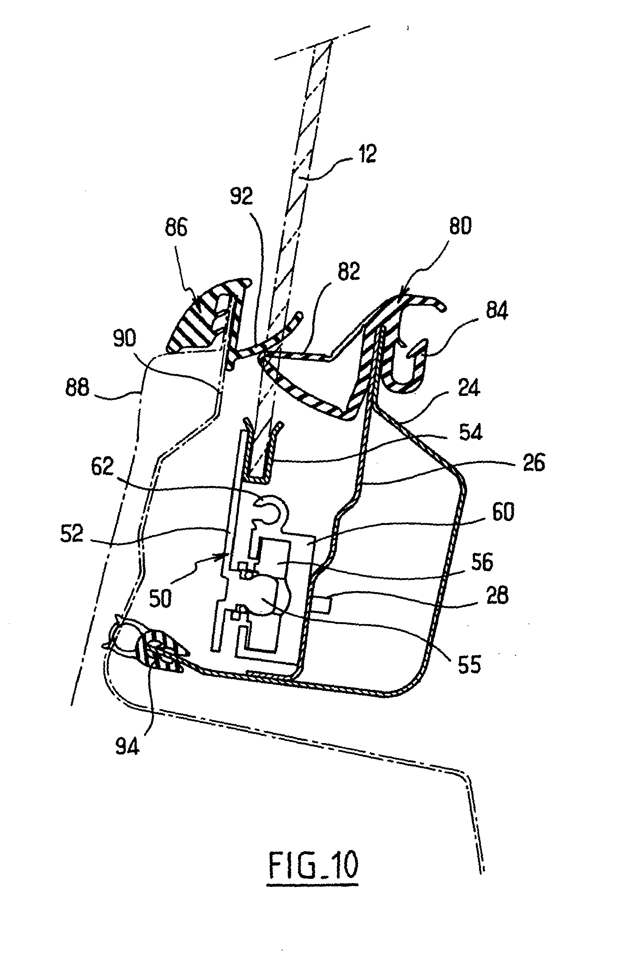

En référence aux figures 7 à 10, le sous-ensemble comprend un support inférieur de vitre 50 comprenant une platine verticale 52 s'étendant suivant la direction longitudinale du véhicule. A son bord supérieur, la platine 52 porte une goulotte 54 ayant une forme en « U » en section transversale dans laquelle est reçu le bord inférieur de la vitre 12 comme illustré à la figure 10. La goulotte est fixée à une face interne de la platine 52. En saillie de la même face, le support 50 comprend des rotules 55 en l'espèce au nombre de deux, reçues dans des logements sphériques de forme complémentaire ménagés dans des patins 56 ayant chacun une forme générale de parallélépipède rectangle allongé suivant la direction de coulissement 42. Les patins sont ici au nombre de deux et chaque patin 56 est reçu dans un rail commun 60 recouvrant la totalité de ses bords supérieur et inférieur ainsi que sa paroi interne. Il recouvre également une partie de sa paroi externe en ménageant néanmoins une lumière pour le passage des rotules 55. Le rail 60 est fixé par sa face intérieure à la partie basse de la doublure de cadre 26 au moyen de plusieurs vis 28.

Le rail porte en partie supérieure un canal 62 à section circulaire ouvert latéralement vers l'extérieur en regard de la platine 52. Ce canal reçoit un câble 64 dont une extrémité est fixée à un taquet 66 illustré aux figures 8 et 9, lui-même rigidement fixé à la platine 52 au niveau d'une lumière 68 de cette dernière. Le câble s'étend dans toute la partie du canal 62 se trouvant entre la lumière 68 et l'extrémité arrière du canal, puis se prolonge en direction verticale jusqu'au moteur. Ce dernier présente des moyens d'entraînement adaptés, connus en eux-mêmes et non décrits en détail, permettant de faire avancer et reculer le câble. Du côté du moteur 30 opposé à la partie du câble dite active qui vient d'être décrite s'étend la partie de câble dite inactive ou morte illustrée en particulier aux figures 4 et 5 et référencée 70. Cette partie est guidée au moyen de reliefs 72 ménagés dans la partie arrière du cadre.

Par conséquent, la commande du moteur 30 permet de faire avancer ou reculer le câble 64, ce qui déplace la platine 52 avec les patins 56 le long du rail inférieur 60 et entraîne la vitre.

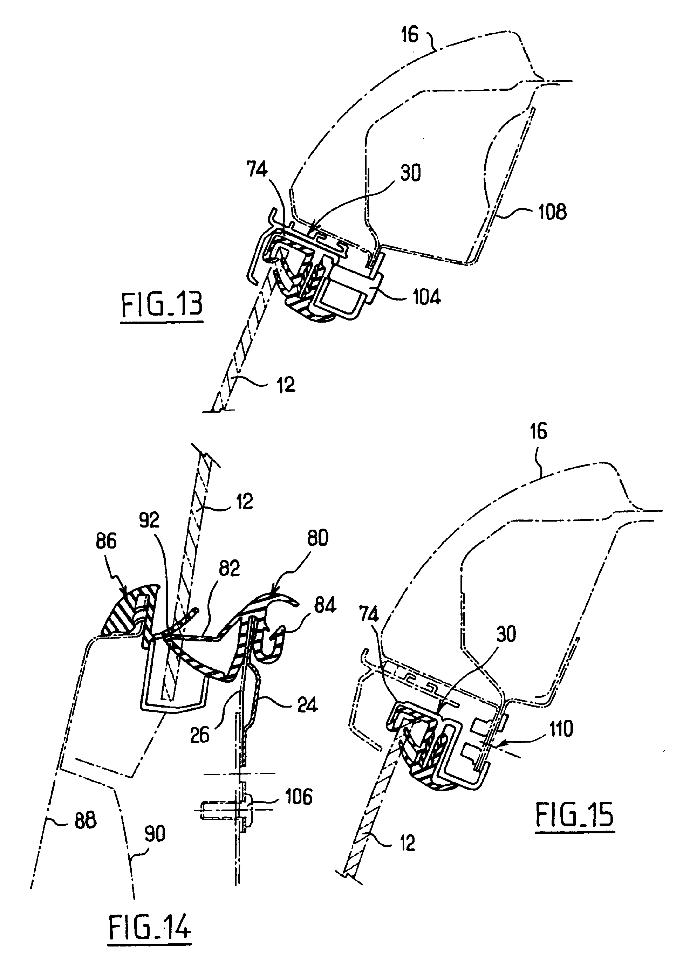

Comme illustré aux figures 13 et 15, le cadre comprend comme moyen de guidage longitudinal du mouvement de la vitre, en plus du rail inférieur ou coulisse 60, le rail supérieur ou coulisse 74 fixé au bord supérieur du cadre et accueillant le bord supérieur de la vitre 12.

Comme illustré en particulier à la figure 10, le sous-ensemble comprend des joint d'étanchéité assurant l'étanchéité à l'égard de l'eau et de l'air entre l'intérieur et l'extérieur du véhicule lorsque la vitre 12 est en position fermée, en particulier au niveau de la vitre 14 et de l'interface entre le sous-ensemble et le reste de la carrosserie.

A cette fin, le sous-ensemble comprend un joint 80 fixé au bord interne du cadre 24 et de la doublure 26, en particulier aux endroits où ces bords sont soudés l'un à l'autre. Ce joint forme un lécheur intérieur 82 venant en contact avec une face interne de la vitre 12 et, de l'autre côté des bords de fixation, un lécheur intérieur 84.

Indépendamment du sous-ensemble, le véhicule comprend un joint 86 fixé à la jonction des bords supérieurs d'une paroi de carrosserie, dite paroi de custode 88, et d'une autre dite doublure de custode 90. Ce joint vient en contact avec une face supérieure externe de la paroi 88 d'un côté du bord de fixation et de l'autre côté comprend une lèvre 92 venant en contact avec une face externe de la vitre 12.

Le sous-ensemble 4 comprend en outre un joint 94 fixé à un bord inférieur du cadre, dirigé vers l'extérieur du véhicule et venant en contact avec une face interne de la doublure de custode 90. Ce joint assure l'étanchéité du sous-ensemble en partie interne.

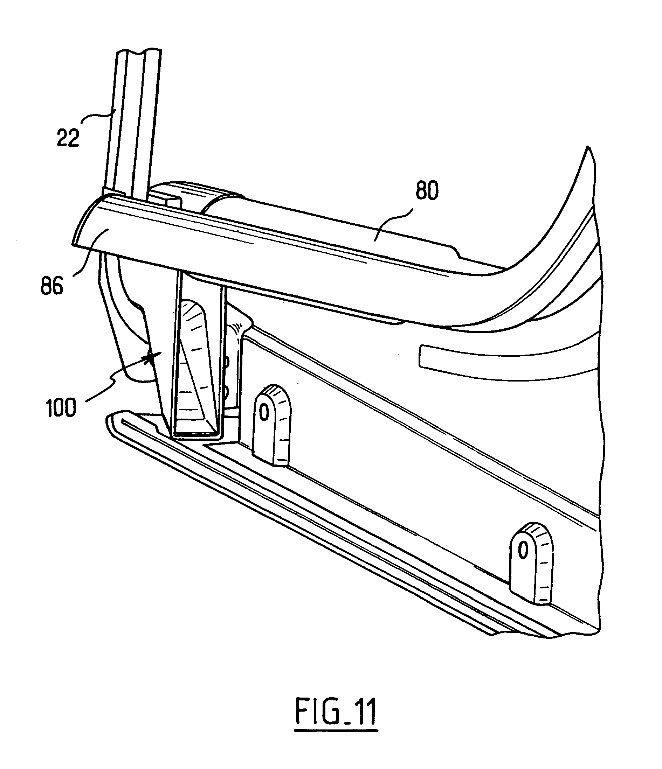

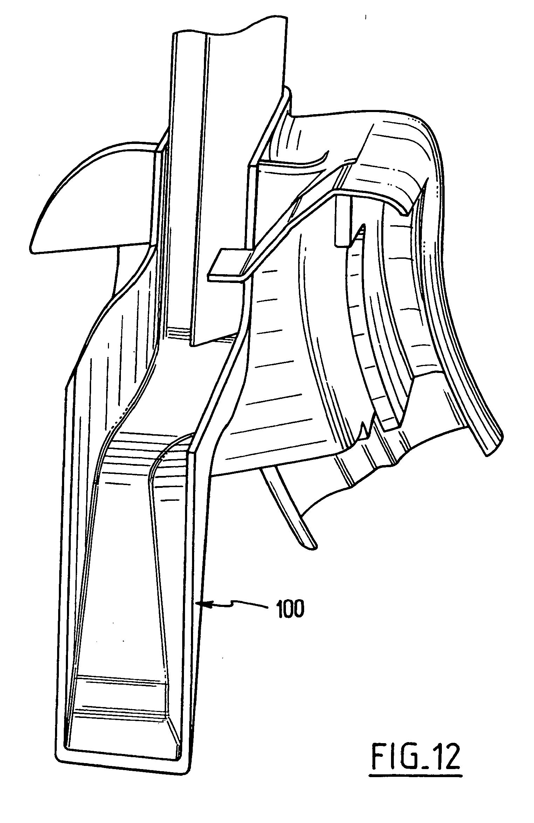

Compte tenu de l'inclinaison vers le bas de l'extrémité avant du bord inférieur de la vitre et des joints d'étanchéité associés, l'eau de ruissellement recueillie par le lécheur 92 s'écoule vers l'extrémité inférieure avant de la vitre 12 et est collectée par un collecteur 100 illustré notamment aux figures 11 et 12, lequel renvoie cette eau vers l'arrière du sous-ensemble dans le conduit formé par la face inférieure du cadre 24, la doublure de custode 90 et la doublure 26. En partie arrière, l'eau est finalement évacuée à l'extérieur du véhicule par un tuyau 102 visible à la figure 4.

Les figures 13 et 14 illustrent les deux pilotes de fixation 104 et 106 servant au positionnement du sous-ensemble 4 lors de son montage sur le véhicule. Ainsi, le pilote 104 est fixé à l'extrémité supérieure avant du cadre en s'étendant suivant une direction généralement perpendiculaire au plan général du cadre. Il est destiné à être reçu dans une encoche ménagée sur une feuillure 108 du côté de caisse recevant le sous-ensemble. Par ailleurs, le pilote 106 est prévu sensiblement à la verticale du pilote 104 au niveau de l'extrémité inférieure avant du cadre. Il s'étend suivant une direction perpendiculaire au plan longitudinal médian du véhicule. Fixé au cadre 24 et à la doublure de cadre 26, il est destiné à pénétrer dans un orifice de la doublure de custode 90 ou pontet en partie basse.

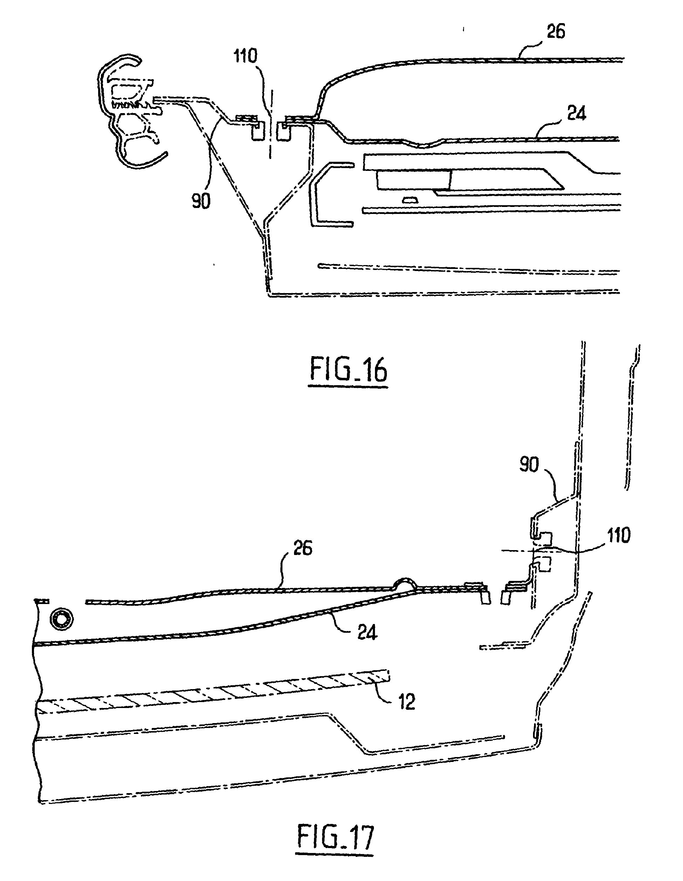

Le sous-ensemble 4 convenablement positionné est par ailleurs fixé rigidement au véhicule au moyen de fixations adaptées, par exemple au moyen de vis qui sont en l'espèce au nombre de 5. Les emplacements de trois de ces vis 110 ont été illustrés sur la figure 6 et sont localisés sur le bord supérieur du cadre pour sa fixation au côté de caisse. Et l'emplacement de fixation le plus en arrière parmi ces trois a été illustré en section à la figure 15. Les deux autres emplacements 110 de fixation des vis ont été illustrés aux figures 16 et 17. Ils sont situés respectivement aux extrémités inférieures avant et arrière du sous-ensemble. Ils permettent sa fixation ici encore à la doublure de custode 90.

Le montage du sous-ensemble ou module s'effectue de la façon suivante. Le sous-ensemble est livré sur chaîne avec la vitre en position légèrement reculée, par exemple de sorte que la distance d, illustrée à la figure 6, entre le bord avant de la vitre et sa position la plus avancée soit de 50 mm. Dans cette position, et contrairement à la position la plus reculée de la vitre, la vitre ne dépasse pas non plus du cadre à l'arrière de celui-ci. Cette position de la vitre entrouverte pour son montage permet d'éviter que la vitre ne soit endommagée par la superstructure du véhicule lors du montage. A ce stade, le joint 22 destiné à assurer l'étanchéité entre la vitre de custode 12 et la vitre 14 de la porte arrière a déjà été fixé sur la vitre 12, par exemple au moyen d'un adhésif. Le joint 86 a été monté préalablement et séparément sur le véhicule. Le moteur et le mécanisme sont en place.

Pour le montage, on présente le sous-ensemble depuis l'intérieur du véhicule. On amène la coulisse ou rail supérieur du sous-ensemble au voisinage de la feuillure haute du côté de caisse tout en indexant le sous-ensemble au moyen du pilote supérieur 104 dans l'encoche aménagée à cet effet sur cette même feuillure. Ce pilote assure à ce stade un positionnement relatif du sous-ensemble par rapport au véhicule suivant la direction X correspondant à la direction longitudinale du véhicule.

Par un mouvement de rotation autour de ce point de la feuillure supérieure, toujours depuis l'intérieur du véhicule, on amène l'autre pilote 106 dans le trou prévu à cet effet sur la doublure de custode. La rotation s'effectue vers l'avant autour de l'axe défini par le pilote 104 c'est-à-dire un axe sensiblement perpendiculaire à la direction longitudinale du véhicule. Ce pilote achève le positionnement suivant la direction longitudinale X et la direction verticale Z. On effectue ensuite la fixation du sous-ensemble au véhicule au moyen des cinq vis. Dans une étape ultérieure, on déroule le joint intérieur 80 qui avait été placé en attente sur le cadre afin de le monter dans son logement et sur la feuillure de porte arrière.

On introduit ensuite le tuyau d'évacuation 102 dans l'orifice prévu à cet effet sur le côté de caisse. On connecte par ailleurs le moteur et son électronique de commande portés par le cadre 24 aux organes de commande du véhicule.

Comme on le voit, le module ou sous-ensemble selon l'invention comprend un cadre qui intègre les rails ou coulisses assurant le débattement longitudinal de la vitre. Le cadre porte également le moteur avec son électronique de gestion pourvue de préférence d'une fonction anti-pincement.

Le sous-ensemble ou module comprend les joints assurant l'étanchéité intérieure du véhicule ainsi que le joint d'étanchéité arrière de la vitre de porte arrière. Il comprend en outre un système de canalisation et d'extraction vers l'extérieur des ruissellements d'eau intérieur et extérieur dans l'environnement de la vitre de custode.

Le sous-ensemble selon l'invention peut être monté de façon rapide sur le véhicule et constitue un ensemble compact intégrant une grande partie des fonctions associées à la vitre de custode.

Bien entendu, on pourra apporter à l'invention de nombreuses modifications sans sortir du cadre de celle-ci.

On pourra appliquer l'invention au cas où le véhicule présente une seule porte de chaque côté.

On pourra prévoir que la porte destinée à être contigüe à la custode présente un montant vertical arrière contrairement à l'exemple qui vient d'être décrit.

Par ailleurs, on pourra mettre en oeuvre un tel sous-ensemble avec une vitre de custode assurant une étanchéité avec la vitre de porte arrière adjacente, indépendamment du fait que le cadre porte les autres joints et les moyens d'écoulement de l'eau.

## Revendications

1. Sous-ensemble (4) de vitre de custode mobile pour véhicule comprenant :
- une vitre (12) ; et
- un moteur (30),
**caractérisé en ce qu'**il comprend un cadre (24) portant la vitre (12) et le moteur (30), ledit cadre (24) comportant des bords internes (36 ; 38 ; 40) disposés de sorte à correspondre sensiblement à la forme des bords supérieur, inférieur et arrière de la vitre (12).

2. Sous-ensemble (4) selon la revendication précédente, **caractérisé en ce que** la vitre (12) est montée mobile à coulissement par rapport au cadre (24).

3. Sous-ensemble (4) selon l'une quelconque des revendications précédentes, **caractérisé en ce que** le cadre (24) porte au moins une coulisse (60, 74) de guidage de la vitre (12).

4. Sous-ensemble (4) selon l'une des revendications 2 et 3, **caractérisé en ce qu'**il est agencé de sorte que, dans sa position la plus reculée, la vitre (12) dépasse d'une extrémité arrière du cadre (24) par référence à la direction de marche du véhicule.

5. Sous-ensemble (4) selon l'une quelconque des revendications précédentes, **caractérisé en ce que** le cadre (24) porte au moins un joint d'étanchéité (80) apte à être en contact avec la vitre.

6. Sous-ensemble (4) selon l'une quelconque des revendications précédentes, **caractérisé en ce que** la vitre (12) présente un bord avant (18) portant un joint d'étanchéité (22).

7. Sous-ensemble (4) selon l'une quelconque des revendications précédentes, **caractérisé en ce qu'**il comprend des moyens (24, 92, 100) de collecte et d'évacuation d'eau.

8. Véhicule (2) comprenant au moins un sous-ensemble selon l'une quelconque des revendications précédentes, le véhicule comprenant une porte (8) portant une vitre (14), dépourvue de montant arrière et contiguë à la vitre (12) de custode, la porte étant de préférence une porte arrière.

9. Procédé de montage d'une vitre de custode sur un véhicule, **caractérisé en ce qu'**on rapporte sur un véhicule (2) un sous ensemble (4) selon l'une quelconque des revendications précédentes, le sous-ensemble (4) comprenant un cadre (24), portant une vitre (12) et un moteur (30) et comportant des bords internes (36 ; 38 ; 40) disposés de sorte à correspondre sensiblement à la forme des bords supérieur, inférieur et arrière de la vitre (12).

10. Procédé selon la revendication précédente, **caractérisé en ce qu'**on rapporte le cadre (24) avec la vitre (12) occupant une position en arrière de sa position la plus avancée par référence au sens de marche du véhicule.

## Claims

1. Mobile rear quarter light window module (4) for a vehicle comprising:
- a window (12); and
- a motor (30),
**characterized in that** it comprises a frame (24) supporting the window (12) and the motor (30), said frame (24) having internal edges (36; 38; 40) arranged so as to substantially correspond to the shape of the top, bottom and rear edges of the window (12).

2. Module (4) according to the preceding claim, **characterized in that** the window (12) is mounted to move by sliding relative to the frame (24).

3. Module (4) according to either of the preceding claims, **characterized in that** the frame (24) supports at least one slide (60, 74) for guiding the window (12).

4. Module (4) according to one of Claims 2 and 3, **characterized in that** it is arranged so that, in its most retracted position, the window (12) extends beyond a rear end of the frame (24) relative to the direction of travel of the vehicle.

5. Module (4) according to any one of the preceding claims, **characterized in that** the frame (24) supports at least one seal (80) suitable to be in contact with the window.

6. Module (4) according to any one of the preceding claims, **characterized in that** the window (12) has a front edge (18) supporting a seal (22).

7. Module (4) according to any one of the preceding claims, **characterized in that** it comprises means (24, 92, 100) for collecting and draining water.

8. Vehicle (2) comprising at least one module according to any one of the preceding claims, the vehicle comprising a door (8) supporting a window (14) without any rear upright and contiguous to the rear quarter light window (12), the door preferably being a rear door.

9. Method for mounting a rear quarter light window on a vehicle, **characterized in that** a module (4) according to any one of the preceding claims is added to a vehicle (2), the module (4) comprising a frame (24), supporting a window (12) and a motor (30) and having internal edges (36; 38; 40) arranged so as to substantially correspond to the shape of the top, bottom and rear edges of the window (12).

10. Method according to the preceding claim, **characterized in that** the frame (24) with the window (12) is added, occupying a position behind its most advanced position relative to the direction of travel of the vehicle.

## Patentansprüche

1. Untereinheit (4) eines beweglichen hinteren Seitenfensters für ein Fahrzeug, die enthält:
- eine Fensterscheibe (12); und
- einen Motor (30),
**dadurch gekennzeichnet, dass** sie einen die Fensterscheibe (12) und den Motor (30) tragenden Rahmen (24) enthält, wobei der Rahmen (24) Innenränder (36; 38; 40) aufweist, die so angeordnet sind, dass sie im Wesentlichen der Form des oberen, unteren und hinteren Rands der Fensterscheibe (12) entsprechen.

2. Untereinheit (4) nach dem vorhergehenden Anspruch, **dadurch gekennzeichnet, dass** die Fensterscheibe (12) bezüglich des Rahmens (24) gleitbeweglich montiert ist.

3. Untereinheit (4) nach einem der vorhergehenden Ansprüche, **dadurch gekennzeichnet, dass** der Rahmen (24) mindestens eine Führungsschiene (60, 74) für die Fensterscheibe (12) trägt.

4. Untereinheit (4) nach einem der Ansprüche 2 und 3, **dadurch gekennzeichnet, dass** sie so gestaltet ist, dass die Fensterscheibe (12) in ihrer am weitesten zurückgeschobenen Stellung über ein hinteres Ende des Rahmens (24) bezüglich der Fahrrichtung des Fahrzeugs hinausgeht.

5. Untereinheit (4) nach einem der vorhergehenden Ansprüche, **dadurch gekennzeichnet, dass** der Rahmen (24) mindestens eine Dichtung (80) trägt, die mit der Fensterscheibe in Kontakt sein kann.

6. Untereinheit (4) nach einem der vorhergehenden Ansprüche, **dadurch gekennzeichnet, dass** die Fensterscheibe (12) einen eine Dichtung (22) tragenden vorderen Rand (18) aufweist.

7. Untereinheit (4) nach einem der vorhergehenden Ansprüche, **dadurch gekennzeichnet, dass** sie Einrichtungen (24, 92, 100) zum Sammeln und Abführen von Wasser aufweist.

8. Fahrzeug (2), das mindestens eine Untereinheit nach einem der vorhergehenden Ansprüche enthält, wobei das Fahrzeug eine Tür (8) enthält, die eine Fensterscheibe (14) trägt, welche keinen hinteren Steg aufweist und an das hintere Seitenfenster (12) angrenzt, wobei die Tür vorzugsweise eine hintere Tür ist.

9. Verfahren zum Einbau eines hinteren Seitenfensters in ein Fahrzeug, **dadurch gekennzeichnet, dass** eine Untereinheit (4) nach einem der vorhergehenden Ansprüche in ein Fahrzeug (2) eingesetzt wird, wobei die Untereinheit (4) einen Rahmen (24) enthält, der eine Fensterscheibe (12) und einen Motor (30) trägt und Innenränder (36; 38; 40) aufweist, die so angeordnet sind, dass sie im Wesentlichen der Form des oberen, unteren und hinteren Rands der Fensterscheibe (12) entsprechen.

10. Verfahren nach dem vorhergehenden Anspruch, **dadurch gekennzeichnet, dass** der Rahmen (24) mit der Fensterscheibe (12) in einer Stellung hinter ihrer bezüglich der Fahrrichtung des Fahrzeugs am weitesten vorne liegenden Stellung eingesetzt wird.
